# EUROPÄISCHE PATENTSCHRIFT

(11) **EP 0 479 100 B1**
(45) Veröffentlichungstag und Bekanntmachung des Hinweises auf die Patenterteilung: **03.12.1997**
(21) Anmeldenummer: 91116282.4
(22) Anmeldetag: 25.09.1991
(51) Int. Cl.: G02B 6/28

(54) **Optischer Sternkoppler**
Optical star coupler
Coupleur à étoile optique

(30) Priorität: 01.10.1990 DE 4030983
(43) Veröffentlichungstag der Anmeldung: 08.04.1992
(73) Patentinhaber: Delphi Automotive Systems Deutschland GmbH, D-42369 Wuppertal (DE)
(72) Erfinder: Haack, Albrecht, Dipl.-Ing., W-5600 Wuppertal 21 (DE)
(74) Vertreter: Denton, Michael John

(56) Entgegenhaltungen:
- GB-A- 2 046 942
- US-A- 4 184 740
- APPLIED OPTICS, Bd. 27, Nr. 15, 1. August 1988, New York, US, SS 3177-3179; KATO I. ET AL.: 'New fabrication method of a star coupler by stacking polymer films'
- PATENT ABSTRACTS OF JAPAN vol. 6, no. 129 (P-128)(1007) 15. Juli 1982 & JP-A-57 054 913
- PATENT ABSTRACTS OF JAPAN vol. 13, no. 309 (P-898) 14. Juli 1989 & JP-A-1 082 004

## Beschreibung

Die Erfindung betrifft einen optischen Sternkoppler gemäß dem Oberbegriff des Anspruchs 1.

Passive optische Sternkopoler dienen dazu, über einen Lichtwellenleiter ankommende optische Information an eine Mehrzahl von Ausgangs-Lichtwellenleiter gleichzeitig weiterzuleiten, und zwar ohne Verwendung einer äußeren Energiequelle. Kernstück eines optischen Sternkopplers ist ein Mischer, der das von irgendeinem von verschiedenen Eingangs-Lichtwellenleitern gelieferte optische Signal möglichst gleichmäßig auf die Ausgangs-Lichtwellenleiter verteilt.

Durch die US-PS 4 213 670 ist ein stabförmiger Mischer bekannt, an dessen sich gegenüberliegenden Enden Gruppen von Eingangs- und Ausgangs-Lichtwellenleiter angeschlossen sind, die jeweils in einer linearen Anordnung nebeneinander angeordnet sind. Da der Mischerstab eine gewisse Mindestlänge besitzen muß, um das von einem Eingangs-Lichtwellenleiter gelieferte optische Signal auf alle Ausgangs-Lichtwellenleiter verteilen zu können, weisen Sternkoppler, die unter Verwendung eines stabförmigen Mischers aufgebaut sind, zwangsläufig eine beträchtliche Baugröße auf, und durch die Heranführung der Lichtwellenleiter von zwei Seiten her wird auch ein relativ großer Platz am Einbauort beansprucht.

Die US-A-41 84 740 zeigt einen Mischer, der aus einer optischen Faser besteht, die zwar auch rechteckig sein kann, aber als optische Faser immer erst beschichtet und dann gebogen wird. Die Glasfaser ist in einem Sockel aus Polymethacryl-Säuremetylester (PMMA) angeordnet.

Die EP-A-0 480 618 zeigt schon eine Paarung von Polycarbonat mit einem Polytetrafluorethylen bei einem beliebigen Lichtleiter.

Der Erfindung liegt die Aufgabe zugrunde, einen Sternkoppler kleiner Baugröße und geringen Platzbedarfes zu schaffen, der insbesondere im Automobilbereich einsetzbar und dementsprechend für eine preiswerte Massenherstellung geeignet sein soll.

Ausgehend von einem Sternkoppler der eingangs genannten Art, ist diese Aufgabe durch die kennzeichnenden Merkmale des Patentanspruchs 1 gelöst.

Durch die Erfindung werden eine Reihe von Vorteilen erreicht. Zum einen wird durch die U-förmige Ausbildung des Mischers die Baulänge des Mischers gegenüber einem geraden stabförmigen Mischer auf weniger als die Hälfte reduziert, wodurch bereits eine wesentlich kleinere Bauform für den Sternkoppler ermöglicht ist. Da im Hinblick auf die Lichtreflexion der Krümmungsradius beim U-förmigen Mischer eine bestimmte Mindestgröße nicht unterschreiten darf, ist bei der Erfindung als weitere Maßnahme zur Verkleinerung der Bauform vorgesehen, den Mischer als Kunststoff-Spritzteil herzustellen und dieses erst nachträglich mit dem Brechungsmantel zu versehen. Da so der Brechungsmantel unmittelbar in seiner endgültigen Form hergestellt ist, also insbesondere keine Verformung durch ein Verbiegen erfahren hat, wird auch bei verhältnismäßig kleinem Krümmungsradius des Mischers eine sehr verlustarme Weiterleitung der Lichtsignale im Bereich des U-Bogens des Mischers erreicht. Von entscheidender Bedeutung ist hierbei ferner die für das Mischer-Spritzteil und den Brechungsmantel verwendete Material-Paarung, bei der eine möglichst große Differenz zwischen den Brechungszahlen gegeben sein soll. Der Erfindung zufolge besteht der Mischer aus einem Polycarbonat hoher Brechungszahl, z. B. n = 1,59. Ein besonders geeignetes Material ist ein unter dem Warenzeichen "Makrolon" bekanntes Polycarbonat. Der Brechungsmantel besteht der Erfindung zufolge aus einem amorphen, fluorisierten Polytetrafluoräthylen mit einer Brechungszahl von etwa n = 1,30. Ein geeignetes Material ist unter dem Warenzeichen "Teflon AF" bekannt. Wie praktische Erprobungen gezeigt haben, erlaubt es die Erfindung, für den U-förmigen Mischer einen Krümmungsradius von nur etwa sechs mm vorzusehen, so daß der Mischer nicht nur in der Baulänge sondern auch in der Bauhöhe mit geringen Abmessungen gefertigt werden kann. Die verwendeten Materialen sind zudem bis mindestens 130 Grad Celsius temperaturbeständig, so daß sie auch diesbezüglich den entsprechenden Anforderungen im Automobilbau gerecht werden. Da bei dem Sternkoppler nach der Erfindung alle Lichtwellenleiter von derselben Seite her an den U-förmigen Mischer herangeführt werden, ist nur eine einzige Aufnahme für alle Lichtwellenleiter erforderlich, und es wird darüberhinaus auch nur verhältnismäßig wenig Raum am Einbauort zur Verlegung der Anschlußleitungen benötigt. Insgesamt ist somit durch die Erfindung ein Sternkoppler sehr geringer Baugröße erreicht, der zudem für eine rationelle Massenfertigung geeignet ist.

Gemäß der Erfindung sind die Lichtwellenleiter lösbar innerhalb der Aufnahme festgeklemmt. Hierdurch ist es möglich, erforderlichenfalls auch Reparaturen am Sternkoppler vorzunehmen, beispielsweise einen gebrochenen Lichtwellenleiter auszuwechseln.

Der Erfindung zufolge weist die Aufnahme an zwei gegenüberliegenden Seiten je einen Verteilerraum für die Lichtwellenleiter auf und laufen die Verteilerräume in zur Kopplungsseite hin offenen Führungsschlitzen aus, welche jeweils eine Breite gleich der Gesamtbreite einer Gruppe der linear nebeneinander angeordneten, abisolierten Lichtwellenleiter besitzen.

Schließlich ist der Erfindung zufolge vorgesehen, daß die Lichtwellenleiter mit den Endbereichen ihrer Isolationen in je eine Muldenleiste eingelegt und durch die Verteilerräume schließende Deckel in ihrer Lage festgeklemmt sind. Ein solcher Aufbau erlaubt eine rationelle Herstellung und vereinfacht darüberhinaus die bei Reparaturen auszuführenden Montagearbeiten.

Nach weiteren Merkmalen der Erfindung kann vorgesehen werden, daß die Abwicklungslänge des U-förmigen Mischers etwa gleich der fünffachen Breite des Mischers ist. Die Breite des Mischers ergibt sich jeweils aus der Anzahl der anzukoppelnden Lichtwellenleiter. Bei einem Durchmesser des abisolierten Lichtwellenleiters, d. h. der Lichtleitfaser, von 1 mm ergibt sich bei einem Sternkoppler, der beispielsweise sieben Eingangs- und sieben Ausgangs-Lichtwellenleiter besitzt, eine Breite des Mischers von sieben mm und damit eine Abwicklungslänge des U-förmigen Mischers von 35 mm. Diese Abwicklungslänge wird der Erfindung zufolge vorzugsweise derart auf die U-Form des Mischer verteilt, daß die Länge des U-Bogens zwischen dem Einfachen bis Zweifachen der Länge eines der geraden U-Schenkel beträgt.. Beim vorgenannten Beispiel kann der Sternkoppler nach der Erfindung somit in einem quaderförmigen Gehäuse von einer Länge von 40-60 mm und einer Breite und Höhe von jeweils 20-30 mm untergebracht werden.

Nach einem weiteren Merkmal der Erfindung kann die Aufnahme, unter Ankopplung der Lichtwellenleiter an die U-Schenkelenden, lösbar am Block befestigt sein.

Der Gegenstand der Erfindung wird nachfolgend anhand eines in der Zeichnung dargestellten Ausführungsbeispieles näher beschrieben. In der Zeichnung zeigen:

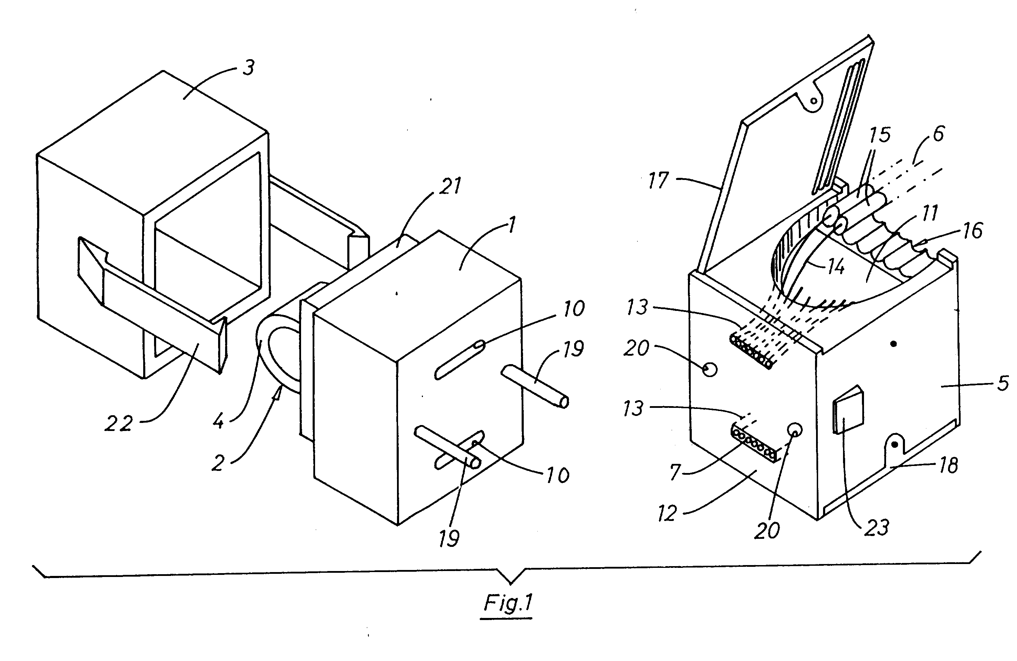

- Fig. 1: in einer Explosivdarstellung einen Sternkoppler nach der Erfindung,
- Fig. 2: den Mischer des Sternkopplers in Seitenansicht,
- Fig. 3: einen Schnitt gemäß der Linie III/III in Fig. 2,
- Fig. 4: eine perspektivische Ansicht des Mischers und
- Fig. 5: eine Seitenansicht auf den zusammengebauten Sternkoppler.

Der Sternkoppler besteht aus einem Block 1, in dem ein U-förmiger Mischer 2 fest eingebaut ist, aus einem Gehäuseteil 3 zur Aufnahme des an einer Hauptseite über den Block 1 vorstehenden U-Bogens 4 des Mischers 2 und aus einem an die gegenüberliegende Hauptseite des Blockes 1 anzuschließende Aufnahme 5 für zwei Gruppen aus jeweils sieben anzukoppelnden Lichtwellenleitern 6 und 7.

Der U-förmige Mischer 2 besteht aus einem Polycarbonat-Kunststoff-Spritzteil mit hoher Brechungszahl, das nach dem Spritzvorgang mit einem Brechungsmantel 8, auch Cladding genannt, aus beispielsweise einem amorphen, fluorisierten-Polytetrafluoräthylen überzogen ist. Beim Ausführungsbeispiel weist der U-förmige Mischer 2 eine Bandstärke S von 0,91 mm, einen Krümmungsradius R von sechs Millimeter, eine Breite B von sieben Millimetern und eine Länge L seiner geraden Schenkel 9 von zehn Millimetern auf. Der Mischer 2 ist mit seinen geraden Schenkeln 9 soweit in den Block 1 eingeschoben, daß seine Stirnenden 10 mit einer Hauptseite des Blockes 1 fluchten.

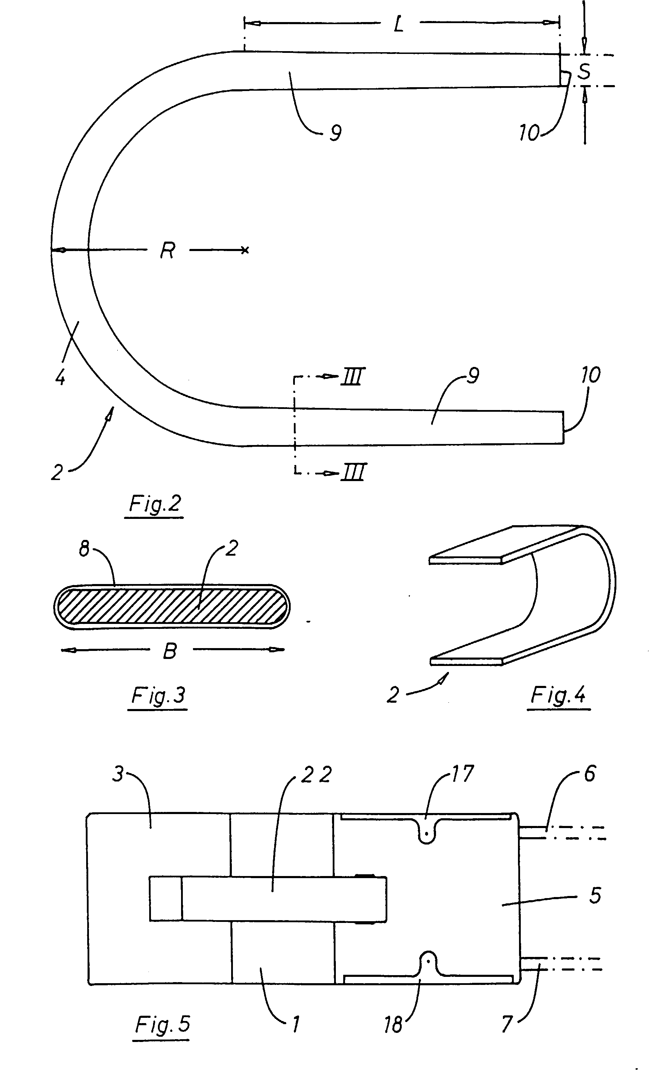

Die als quaderförmiges Gehäuse ausgebildete Aufnahme 5 weist an ihrer Oberseite und an ihrer Unterseite je einen Verteilerraum 11 auf, die zur Kopplungsseite 12 hin jeweils in einem Schlitz 13 münden, dessen Querschnittsabmessung gleich der Querschnittsabmessung des Mischers 2 ist, vergleiche Fig. 3, und der jeweils zum Einschieben der Lichtleitfasern 14 der Lichtwellenleiter 6 und 7 geeignet ist. Beim Ausführungsbeispiel enthält jede Gruppe sieben Lichtwellenleiter, die in den Schlitzen 13 linear nebeneinander angeordnet sind. Die Schlitze 13 weisen einen Abstand gleich dem Abstand zwischen den Enden 10 des Mischers 2 auf. Die Lichtwellenleiter 6 bzw. 7 sind mit den Enden ihrer Isolierung 15 jeweils in eine Muldenleiste 16 eingelegt und dort durch einen, jeweils einen der Verteilerräume 11 verschließenden Deckel 17, 18 festgeklemmt. Die Lichtleitfasern werden bei der Montage zunächst soweit durch die Schlitze 13 vorgeschoben, daß ihre Enden über die Kopplungsseite 12 etwas vorstehen, wonach dann die Lichtwellenleiter mittels der Deckel 17, 18 festgeklemmt werden. Anschließend werden die vorstehenden Enden der Lichtleitfasern gekürzt und poliert, so daß auch deren Enden mit der ebenen Kopplungsseite 12 der Aufnahme fluchten. Sodann werden Block 1 und Aufnahme 5 unter Verwendung der Ausrichtstifte 19 und der dazugehörigen Aufnahmelöcher 20 zusammengesteckt, und der Block 1 wird mit seinem Zentrieransatz 21 in das Gehäuseteil 3 eingeschoben, wobei dann am Gehäuseteil 3 vorgesehene Rastarme 22 jeweils einen zugeordneten Rastsitz 23 an der Aufnahme 5 hintergreifen. Die Länge der Rastarme 22 ist hierbei so bemessen, daß die Kopplungsseite 12 der Aufnahme 5 stramm am Block 1 anliegt und damit eine optische Kopplung zwischen den Stirnenden der Lichtleitfasern 14 und den Enden 10 des Mischers 2 herstellt. Auch der Block 1, das Gehäuseteil 3 und die Aufnahme 5 und deren Deckel 17, 18 sind als Kunststoff-Spritzteile hergestellt.

### Bezugszeichenliste

- 1: Block
- 2: Mischer
- 3: Gehäuseteil
- 4: U-Bogen
- 5: Aufnahme
- 6: Lichtwellenleiter
- 7: Lichtwellenleiter
- 8: Brechungsmantel (Cladding)
- 9: Schenkel
- 10: Stirnende
- 11: Verteilerraum
- 12: Kopplungsseite
- 13: Schlitz
- 14: Lichtleitfaser
- 15: Isolierung
- 16: Muldenleiste
- 17: Deckel
- 18: Deckel
- 19: Ausrichtstift
- 20: Aufnahmeloch
- 21: Zentrieransatz
- 22: Rastarm
- 23: Rastsitz

- R: Krümmungsradius
- L: Schenkellänge
- S: Stärke
- B: Breite

## Patentansprüche

1. Optischer Sternkoppler, bestehend
- aus einem Mischer (2), der aus einem U-Förmigen Band besteht, in dessen sich gegenüberliegenden Enden Licht mittels Lichtwellenleitern (6, 7) ein- und ausgekoppelt wird,
- und aus mindestens einer Aufnahme (5) für die nebeneinander angeordneten anzukoppelnden Lichtwellenleiter (6, 7),
- wobei die U-Schenkel (9) des Bandes in einem Block (1) gehalten sind und die Enden der anzukoppelnden Lichtwellenleiter (6, 7) innerhalb der Aufnahme (5) in zwei Ebenen im Abstand der U-Schenkel (9, 9) übereinanderliegen,
und der Block (1) mit der Kopplungsseite der Aufnahme (5) verbunden ist
dadurch gekennzeichnet, daß
- der Mischer (2) ein U-förmiges Kunststoff-Spritzteil aus einem bis mindestens 125°C temperaturbeständigen Polycarbonat hoher Brechungszahl, etwa n = 1,59, ist
- daß der Mischer (2) allseitig mit einem Brechungsmantel (8) aus einem amorphen, fluorisierten Polytetrafluoräthylen mit einer niedrigen Brechungszahl etwa n = 1,30 überzogen ist,
- daß die Lichtwellenleiter (6, 7) lösbar innerhalb der Aufnahme (5) festgeklemmt sind,
- daß die Aufnahme (5) an zwei gegenüberliegenden Seiten je einen Verteilerraum (11) für die Lichtwellenleiter (6, 7) aufweist und daß die Verteilerräume (11) in zur Kopplungsseite (12) hin offenen Führungsschlitzen (13) auslaufen, welche jeweils eine Breite (B) gleich der Gesamtbreite der linear nebeneinander angeordneten, abisolierten Lichtwellenleiter (6, 7) besitzen und
- daß die Lichtwellenleiter (6, 7) mit den Endbereichen ihrer Isolierung (15) in je eine Leiste (16) mit muldenförmigen Vertiefungen eingelegt und durch die Verteilerräume (11) schließende Deckel (17, 18) in ihrer Lage festgeklemmt sind.

2. Sternkoppler nach Anspruch 1, dadurch gekennzeichnet, daß die Abwicklungslänge des U-förmigen Mischers (2) etwa gleich der fünffachen Breite (B) des bandförmigen Mischers (2) ist.

3. Sternkoppler nach Anspruch 2, dadurch gekennzeichnet, daß die Länge des U-Bogens (4) zwischen dem Einfachen bis Zweifachen der Länge (L) eines geraden U-Schenkels (9) beträgt.

4. Stemkoppler nach einem der Ansprüche 1 bis 3, dadurch gekennzeichnet, daß die Aufnahme (5), unter Ankopplung der Lichtwellenleiter (6, 7) an die U-Schenkelenden (10), lösbar am Block (1) befestigt ist.

## Claims

1. Optical star coupler, comprising
- a mixer (2) comprising a U-shaped band, in whose oppositely-lying ends light is coupled in and out by means of optical waveguides (6, 7),
- and at least one receiving means (5) for the waveguides (6, 7) to be coupled located next to one another,
- the U-legs (9) of the band being held in a block (1) and the ends of the waveguides (6, 7) to be coupled lie one above the other within the receiving means ( 5) in two planes at a distance from the U-legs (9, 9), and the block (1) is connected to the coupling side of the receiving means (5),
characterised in that
- the mixer (2) is a U-shaped plastics injection moulded part of a polycarbonate of high refractive number, about n = 1.59, which is temperature resistant up to at least 125°C,
- that the mixer (2) is covered on all sides with a refractive covering (8) of an amorphous fluorised polytetrafluorethylene with a low refractive number of about n = 1.30,
- that the waveguides (6, 7) are detachably clamped inside the receiving means (5),
- that the receiving means (5) has on two opposite sides a respective distributor space (11) for the waveguides (6, 7), and in that the distributor spaces (11) taper out into guide slots (13) open towards the coupling side (12), said slots each having a width (B) equal to the overall width of the insulated waveguides (6, 7) disposed linearly next to one another, and
- that the waveguides (6, 7) are inserted with the end areas of their insulation (15) into a respective strip (16) with trough-shaped recesses, and are clamped in position by the lids (17, 18) closing the distributor spaces (11).

2. Star coupler according to claim 1, characterised in that the developed length of the U-shaped mixer (2) is roughly equal to five times the width (B) of the band-shaped mixer (2).

3. Star coupler according to claim 2, characterised in that the length of the U-shaped bow (4) comes to between one to two times the length (L) of a straight U-leg (9).

4. Star coupler according to one of claims 1 to 3, characterised in that the receiving means (5) is detachably secured to the block (1) coupling the waveguides (6, 7) to the ends of the U-legs (10).

## Revendications

1. Coupleur optique en étoile comprenant :
- un mélangeur (2) qui est composé d'une bande en forme de U aux extrémités opposées de laquelle la lumière est couplée en entrée et en sortie au moyen de guides d'ondes lumineuses (6, 7),
- et au moins un réceptacle (5) pour recevoir les guides d'ondes lumineuses (6, 7) à accoupler, disposés les uns à côté des autres,
- les branches (9) du U de la bande étant tenu dans un bloc (1) et les extrémités des guides d'ondes lumineuses (6, 7) qu'il s'agit d'accoupler étant superposées à l'intérieur du réceptacle (5) en deux plans situés à l'écartement des branches (9, 9) en U,
et le bloc (1) est réuni à la face d'accouplement du réceptacle (5),
caractérisé
- en ce que le mélangeur (2) est une pièce moulée par injection, en matière plastique, en forme de U, faite d'un polycarbonate résistant à la température jusqu'à au moins 125 °C et possédant un haut indice de réfraction, d'environ n = 1,59,
- en ce que le mélangeur (2) est revêtu de tous côtés d'une gaine de réfraction (8) faite d'un polytétrafluoréthylène amorphe fluorisé, possédant un bas indice de réfraction d'environ n = 1,30,
- en ce que les guides d'ondes lumineuses (6, 7) sont bloqués de façon démontable à l'intérieur du réceptacle (5),
- en ce que le réceptacle (5) présente sur chacun de deux côtés opposés une chambre de distribution (11) pour recevoir les guides d'ondes lumineuses (6, 7), et en ce que les chambres de distribution (11) se terminent par des fentes de guidage (13) s'ouvrant sur la face d'accouplement et qui possèdent chacune une largeur (B) égale à la largeur totale des guides d'ondes lumineuses (6, 7) dénudés, disposés en ligne les uns à côté des autres, et
- en ce que les guides d'ondes lumineuses (6, 7) sont encastrés, par les régions terminales de leur isolant (15) dans une barrette (16) présentant des évidements en forme d'encoche et sont bloqués en position par des couvercles (17, 18) qui ferment les chambres de distribution (11).

2. Coupleur en étoile selon la revendication 1, caractérisé en ce que la longueur développée du mélangeur en forme de U (2) est égale à cinq fois la largeur (B) du mélangeur en forme de bande (2).

3. Coupleur en étoile selon la revendication 2, caractérisé en ce que la longueur de l'arc en U (4) vaut entre une fois et deux fois la longueur (L) d'une branche droite (9) du U.

4. Coupleur en étoile selon une des revendications 1 à 3, caractérisé en ce que le réceptacle (5) est fixé au bloc (1) de façon démontable, avec couplage des guides d'ondes lumineuses (6, 7) aux extrémités des branches du U.
